# EUROPEAN PATENT SPECIFICATION

(11) **EP 2 982 601 B1**
(45) Date of publication and mention of the grant of the patent: **29.04.2020**
(21) Application number: 14717154.0
(22) Date of filing: 01.04.2014
(51) Int. Cl.: B64D 47/02, B64D 45/00, B64C 25/28

(54) **AIRCRAFT SAFETY SYSTEM**
SICHERHEITSSYSTEM FÜR FLUGZEUGE
SYSTÈME DE SÉCURITÉ D'UN AÉRONEF

(30) Priority: 04.04.2013 ES 201330486
(43) Date of publication of application: 10.02.2016
(73) Proprietor: Ruano Rueda, Santiago, 28860 Paracuellos Del Jarama (Madrid) (ES)
(72) Inventor: Ruano Rueda, Santiago, 28860 Paracuellos Del Jarama (Madrid) (ES)
(74) Representative: González López-Menchero, Álvaro Luis
(86) International application number: PCT/ES2014/070248
(87) International publication number: WO 2014/162032

(56) References cited:
- EP-A1- 2 284 054
- EP-A1- 2 463 166
- GB-A- 2 450 796
- GB-A- 2 470 251
- US-A- 4 008 868
- US-A1- 2008 033 607

## Description

### OBJECT OF THE INVENTION

As indicated in the title of the invention, the object of the present invention is an aircraft having an aircraft safety system which allows safely indicating the state of the aircraft through its own means, with respect to its availability to be able to move, i.e., if it is stopped with or without the parking brake or hand brake activated.

As a result of the control means that the safety system has, combined with field indicators, an aircraft safety system that allows indicating in a safe and reliable manner the state of the parking brake of the aircraft, and therefore acting accordingly without any danger whatsoever for maintenance and support crew, is achieved.

Therefore, the present invention is comprised in the field of aircraft and the like, and it is particularly comprised in indicator systems.

### PRIOR ART

In the state of the art, once aircraft have landed they either head for the jet bridge or connecting point for the boarding or deboarding of passengers, or they remain stopped on a certain point of the runway.

During the time that the aircraft is idle, the ground crew is unable to determine if the aircraft might perform an unexpected maneuver, or, in contrast, if it is in a completely stopped position through its own means without any intention of performing any maneuver.

Sometimes the ground crew that tends to the aircraft approaches said aircraft in order to perform maintenance tasks without being fully certain of the complete immobilization of the aircraft through its own means, even situations of unexpected movement of the aircraft with the ground crew directly interacting with the aircraft being able to occur, with the subsequent danger for the crew and for the aircraft.

In the state of the art, Airbus A319, A320 and A321 aircraft have warning lights indicating the actuation of the actuation brake without having additional means increasing the safety of the indication of the state of the aircraft.

An aircraft having an aircraft safety system of this type is already known from the document US 20080033607.

Therefore, an object of the present invention is to develop an aircraft having an aircraft safety system which allows the ground crew tending to the aircraft to know when it is safe to approach the aircraft and perform the tasks they must perform, so a safety system such as the one described below and included in its essentiality in claim 1 has been developed.

### DESCRIPTION OF THE INVENTION

An object of the present invention is an aircraft having an aircraft safety system for indicating when it is safe to approach an aircraft.

The aircraft safety system seeks to provide a visual indication to ground operators for the purpose of assuring safe and reliable information as to whether or not they can approach the aircraft.

The light indicators are arranged in the main landing gear and in the landing gear nose leg.

The system comprises a dual set of indicators. The first indicator is a mechanical-type indicator which allows continuously displaying a surface of one color or another color, according to the state of the aircraft and particularly of the parking brake.

The second indicator is an electrically activated light indicator which is activated only when the conditions necessary for activation thereof are present, in addition to the aircraft being connected.

Both indicators are redundant regarding the same information, i.e., indicating the state of the aircraft, but the first indicator provides information about the state of the aircraft continuously, whereas the second indicator provides the information when the aircraft is energized.

The system comprises a control unit which provides activation signals to the indicators depending on input signals.

The control unit receives information from a sensor associated with the lever of the landing gear, from a microswitch or the like arranged on the landing gear itself which detects that the wheels are bearing weight.

When the information coming from the two indicated sensors is concurrent, the control unit considers that the landing gear has been deployed, that it is in contact with the ground. Depending on the signal from a sensor associated with the parking brake lever or the like plus the signal of hydraulic pressure sensor in the brake system of the aircraft, an indication will be given concerning the locking of the wheels by the action of the parking brake, at which time it sends an activation signal to the first indicator or mechanical indicator, which switches from one color to another, and another activation signal to the second indicator or light indicator which switches from one lighting color to another.

The color code adopted for indicating when it is safe to approach the aircraft can be any color code, as long as it is recognized and validated by the users. For example, the color green could indicate that it is not possible to approach the aircraft and the red to indicate that it is possible.

The power supply of the first type of indicator or mechanical indicator takes place from what is known in the sector as continuous power supply.

The power supply of the second type of indicator or light indicator takes place from what is known in the sector as power bus, which allows power supply when the battery power receptacle is energized. Furthermore, the light intensity of the LEDs that are part of the light indicator is regulated by a potentiometer depending on the "taxi light" of the aircraft, such that if the so-called "taxi light" is disconnected, the emitted light intensity will be lower, and in the opposite situation it will be higher.

Therefore as a result of the described aircraft safety system, redundant information about the state of the aircraft offering certainty to the ground crew tending to the aircraft as to whether or not it is safe to approach said aircraft is achieved.

### DESCRIPTION OF THE DRAWINGS

To complement the description that is being made and for the purpose of aiding to better understand the features of the invention according to a preferred practical embodiment thereof, a set of drawings is attached as an integral part of said description in which the following has been depicted with an illustrative and nonlimiting character.
Figure 1 shows part of a landing gear where the two types of light indicators can be seen.
Figure 2 shows the aircraft nose leg which also has the types of light indicators.
Figure 3 shows the elements that are part of the aircraft safety system.
Figure 4 shows a flow chart of the operating conditions of the two types of light indicators.

### PREFERRED EMBODIMENT OF THE INVENTION

A preferred embodiment of the proposed invention is described below in view of the drawings.

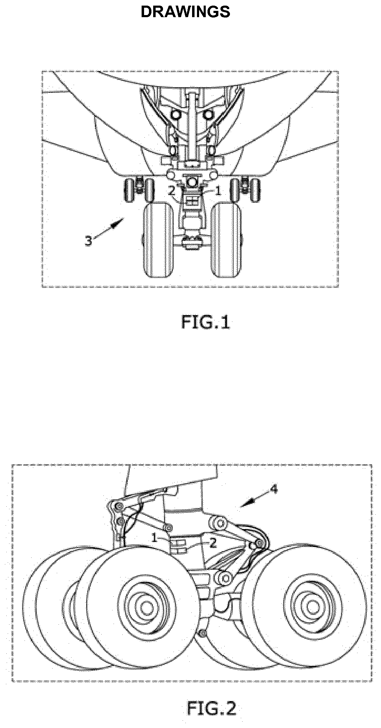

Figure 1 shows the landing gear (3) of an aircraft where two types of indicators, a first type or mechanical indicator (1) and a second type or light indicator (2), are arranged on the outer side of the legs.

Figure 2 shows the landing gear leg (4) which has the two indicators (1) and (2) in the front part thereof.

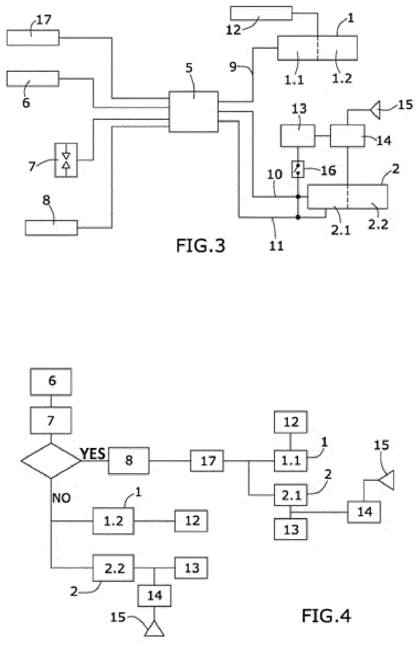

Figure 3 shows the elements that are part of the safety system.

The first type of indicator or mechanical indicator (1) comprises a window which, depending on its position, shows either a first tab (1.1) or a second tab (1.2), of different colors, depending on the state of the aircraft.

This first indicator (1) is powered continuously from a continuous power supply (12) which assures constant power supply, so there will always be an indication of the state of the aircraft in relation to its state to allow the ground crew to approach or not.

The second type of indicator or light indicator (2) comprises first and second light means (2.1, 2.2), which can be LEDs or the like, of two different colors, and some or others will be activated according to the state of the aircraft to allow the ground crew to approach or not.

This second type of indicator (2) is powered from a power bus (13) through a potentiometer (14) controlling the brightness of the lighting means depending on the so-called "taxi light" (15) of the aircraft.

The activation of the lighting means is controlled by a control (5) receiving the information from:
- a sensor (6) associated with the activation lever of the landing gear,
- a microswitch (7) or the like associated with the wheels of the landing gear and indicating if the wheels are bearing weight,
- a sensor associated with an actuation lever for actuating the parking brake (8),
- a hydraulic pressure sensor (17) in the brake systems, which reads the hydraulic pressure in the brake systems.

Depending on the values of said sensors, the control unit (5) sends a switching signal (9) to the first indicator (1) or mechanical indicator, making the window switch from one position or another, leaving the first tab (1.1) or the second tab (1.2) visible; and first and second activation signals (10, 11) for activating the first light means (2.1) or second light means (2.2), which turn the corresponding light means on or off.

The information about the first indicator (1) and about the second indicator (2) is consistent at all times.

Furthermore, between the power bus (13) and the activation signals (10) and (11) for activating the light means (2.1) or (2.2) there is a test switch (16) which allows recognizing the state of the light signals of the light indicator (2) independently of the control (5).

Figure 4 shows the operating diagram of the two types of light indicators (1) and (2). Therefore, when the activation sensor of the landing gear (6) and the microswitch (7) is activated, it is verified whether or not the system is active. In the event that it is active, if the conditions for activating the parking brake (8), together with the activation of the hydraulic pressure sensor in brakes (17) are present, on one hand the first indicator or mechanical indicator (1), powered from the continuous power supply (12), is activated, leaving tab (1.1), for example, which is red, visible, whereas the second indicator or light indicator (2), powered from the power bus (13), would activate the light means (2.1) which would be of the same color as the previous one, i.e., red.

In the event that the system is not active, tab (1.2), which would be the color green, would be activated in the mechanical indicator (1), whereas the light means (2.2), which would be green, would be activated in the light indicator (2).

Therefore, the red indication both in the first indicator or mechanical indicator (1) and in the second indicator or light indicator (2) appears only if the conditions necessary for it are present, otherwise green indications will appear.

## Claims

1. An aircraft comprising: landing gear, landing gear legs, an activation lever of the landing gear, a parking brake, an actuation lever for actuation the parking brake, brake systems, wheels and an aircraft safety system for indicating the state of the aircraft and for being able to safely approach said aircraft, whereby said aircraft system comprises:
- two types of indicators, a first type or mechanical indicator (1), and a second type or light indicator (2), arranged on at least one of said landing gear legs,
- a first sensor (6) associated with said activation lever of said landing gear,
- a micro switch (7) or the like associated with said wheels of said landing gear and indicating if said wheels are bearing weight,
- a second sensor (8) associated with said actuation lever for actuating said parking brake,
- a hydraulic pressure sensor (17) in said brake systems,
- a control unit (5) which receives information from said first sensors (6), said second sensor (8), said hydraulic pressure sensor (17) and said micro switch (7) wherein
said light indicator (2) comprises first light means (2.1) and second light means (2.2) of a different colour to that of said first light means (2.1) and
said control unit (5) sends a switching signal (9) to said first indicator (1) or mechanical indicator, and a first activation signal (10) for activating said first light means (2.1) or a second activation signal (11) for activating said second light means (2.2), depending on the values of said first sensor (6), said second sensor (8) and said hydraulic pressure sensor (17).

2. The aircraft according to claim 1, **characterized in that** the first type of indicator or mechanical indicator (1) comprises a window which, depending on its position, shows either a first tab (1.1) or a second tab (1.2), of different colors, depending on the state of the aircraft.

3. The aircraft according to claim 2, **characterized in that** the first indicator (1) is powered continuously from a continuous power supply (12).

4. The aircraft according to claim 1, **characterized in that** the second type of indicator or light indicator (2) comprises said first and second light means (2.1, 2.2) and some or others will be activated according to the state of the aircraft.

5. The aircraft according to claim 4, **characterized in that** the second type of indicator (2) is powered from a power bus (13) of the aircraft.

6. The aircraft according to claim 5, **characterized in that** the power is supplied from said power bus (13) through a potentiometer (14) controlling the brightness of said light means depending on a light (15) of the aircraft.

7. The aircraft according to claim 5, **characterized in that** between said power bus (13) and said first and second activation signals (10, 11) for activating said first and second light means (2.1, 2.2) there is a test switch (16) which allows recognizing independently of the control (5) the state of the light signals of the light indicator (2).

## Patentansprüche

1. Flugzeug, umfassend: Fahrwerk, Fahrwerkbeine, einen Aktivierungshebel des Fahrwerks, eine Feststellbremse, einen Betätigungshebel zum Betätigen der Feststellbremse, Bremssysteme, Räder und ein Flugzeugsicherheitssystem, um den Zustand des Flugzeugs anzuzeigen und in der Lage zu sein, sich dem Flugzeug sicher zu nähern, wobei das Flugzeugsystem umfasst:
- zwei Arten von Anzeigen, eine erste Art oder eine mechanische Anzeige (1) und eine zweite Art oder eine Lichtanzeige (2), die an mindestens einem der Fahrwerkbeine angeordnet sind,
- einen ersten Sensor (6), der dem Aktivierungshebel des Fahrwerks zugeordnet ist,
- einen Mikroschalter (7) oder dergleichen, der den Rädern des Fahrwerks zugeordnet ist und anzeigt, ob die Räder ein Gewicht tragen,
- einen zweiten Sensor (8), der dem Betätigungshebel zum Betätigen der Feststellbremse zugeordnet ist,
- einen Hydraulikdrucksensor (17) in den Bremssystemen,
- eine Steuereinheit (5), die Informationen von den ersten Sensoren (6), dem zweiten Sensor (8), dem Hydraulikdrucksensor (17) und dem Mikroschalter (7) empfängt, wobei
die Lichtanzeige (2) ein erstes Lichtmittel (2.1) und ein zweites Lichtmittel (2.2) umfasst, die eine andere Farbe haben als das erste Lichtmittel (2.1) und
die Steuereinheit (5) ein Schaltsignal (9) an die erste Anzeige (1) oder eine mechanische Anzeige und ein erstes Aktivierungssignal (10) zum Aktivieren der ersten Lichtmittel (2.1) oder ein zweites Aktivierungssignal (11) zum Aktivieren der zweiten Lichtmittel (2.2) in Abhängigkeit von den Werten des ersten Sensors (6), des zweiten Sensors (8) und des Hydraulikdrucksensors (17) sendet.

2. Flugzeug nach Anspruch 1, **dadurch gekennzeichnet, dass** die erste Art von Anzeige oder mechanischer Anzeige (1) ein Fenster umfasst, das abhängig von seiner Position und abhängig vom Zustand des Flugzeugs entweder eine erste Lasche (1.1) oder eine zweite Lasche (1.2) in verschiedenen Farben zeigt.

3. Flugzeug nach Anspruch 2, **dadurch gekennzeichnet, dass** die erste Anzeige (1) kontinuierlich von einer kontinuierlichen Energieversorgung (12) angetrieben wird.

4. Flugzeug nach Anspruch 1, **dadurch gekennzeichnet, dass** die zweite Art von Anzeige oder Lichtanzeige (2) die ersten und zweiten Lichtmittel (2.1, 2.2) umfasst und gemäß dem Zustand des Flugzeugs die einen oder die anderen aktiviert werden.

5. Flugzeug nach Anspruch 4, **dadurch gekennzeichnet, dass** die zweite Art von Anzeige (2) von einem Energiebus (13) des Flugzeugs angetrieben wird.

6. Flugzeug nach Anspruch 5, **dadurch gekennzeichnet, dass** die Energie von dem Energiebus (13) über ein Potentiometer (14) zugeführt wird, das die Helligkeit der Lichtmittel in Abhängigkeit von einem Licht (15) des Flugzeugs steuert.

7. Flugzeug nach Anspruch 5, **dadurch gekennzeichnet, dass** zwischen dem Energiebus (13) und dem ersten und dem zweiten Aktivierungssignal (10, 11) zum Aktivieren des ersten und des zweiten Lichtmittels (2.1, 2.2) ein Testschalter (16) vorhanden ist, der eine Erkennung des Zustands der Lichtsignale der Lichtanzeige (2) unabhängig von der Steuerung (5) ermöglicht.

## Revendications

1. Aéronef comprenant: train d'atterrissage, jambes de train d'atterrissage, un levier d'activation du train d'atterrissage, un frein de stationnement, un levier d'activation pour l'activation du frein de stationnement, des systèmes de freinage, des roues et un système de sécurité d'aéronef pour indiquer l'état de l'aéronef et pour pouvoir s'approcher en toute sécurité dudit aéronef, dans lequel ledit système d'aéronef comprend:
- deux types d'indicateurs, un premier type ou indicateur mécanique (1), et un deuxième type ou indicateur lumineux (2), disposés sur au moins l'une desdites jambes du train d'atterrissage,
- un premier capteur (6) associé audit levier d'activation dudit train d'atterrissage,
- un microrupteur (7) ou similaire associé auxdites roues dudit train d'atterrissage et indiquant si lesdites roues portent un poids,
- un deuxième capteur (8) associé audit levier d'activation pour l'activation dudit frein de stationnement,
- un capteur de pression hydraulique (17) dans lesdits systèmes de freinage,
- une unité de commande (5) qui reçoit des informations desdits premiers capteurs (6), dudit deuxième capteur (8), dudit capteur de pression hydraulique (17) et dudit microrupteur (7) dans lequel
ledit indicateur lumineux (2) comprend des premiers moyens lumineux (2.1) et des deuxièmes moyens lumineux (2.2) d'une couleur différente de celle desdits premiers moyens lumineux (2.1) et
ladite unité de commande (5) envoie un signal de commutation (9) audit premier indicateur (1) ou indicateur mécanique, et un premier signal d'activation (10) pour l'activation desdits premiers moyens lumineux (2.1) ou un deuxième signal d'activation (11) pour l'activation desdits deuxièmes moyens lumineux (2.2), en fonction des valeurs dudit premier capteur (6), dudit deuxième capteur (8) et dudit capteur de pression hydraulique (17).

2. Aéronef selon la revendication 1, **caractérisé en ce que** le premier type d'indicateur ou indicateur mécanique (1) comprend une fenêtre qui, en fonction de sa position, affiche soit une première languette (1.1) soit une deuxième languette (1.2), de couleurs différentes, en fonction de l'état de l'aéronef.

3. Aéronef selon la revendication 2, **caractérisé en ce que** le premier indicateur (1) est alimenté en continu à partir d'une alimentation continue (12).

4. Aéronef selon la revendication 1, **caractérisé en ce que** le deuxième type d'indicateur ou indicateur lumineux (2) comprend lesdits premiers et deuxièmes moyens lumineux (2.1, 2.2) et les uns ou les autres seront activés selon l'état de l'aéronef.

5. Aéronef selon la revendication 4, **caractérisé en ce que** le deuxième type d'indicateur (2) est alimenté à partir d'un bus d'alimentation (13) de l'aéronef.

6. Aéronef selon la revendication 5, **caractérisé en ce que** l'alimentation est fournie à partir dudit bus d'alimentation (13) par le biais d'un potentiomètre (14) commandant la luminosité desdits moyens lumineux en fonction d'une lumière (15) de l'aéronef.

7. Aéronef selon la revendication 5, **caractérisé en ce qu'**entre ledit bus d'alimentation (13) et lesdits premier et deuxième signaux d'activation (10, 11) pour l'activation desdits premiers et deuxièmes moyens lumineux (2.1, 2.2) il y a un interrupteur d'essai (16) qui permet de reconnaître indépendamment de la commande (5), l'état des signaux lumineux de l'indicateur lumineux (2).
